# EUROPEAN PATENT SPECIFICATION

(11) **EP 1 246 428 B1**
(45) Date of publication and mention of the grant of the patent: **10.11.2010**
(21) Application number: 02251967.2
(22) Date of filing: 19.03.2002
(51) Int. Cl.: H04L 29/06

(54) **Client server system with authentication**
Benutzer Anbieter System mit Authentifizierung
Système client serveur avec authentification

(30) Priority: 19.03.2001 GB 0106746
(43) Date of publication of application: 02.10.2002
(73) Proprietor: Nokia Corporation, 02150 Espoo (FI)
(72) Inventor: Emmerson, Francis, Windsor, Berkshire SL4 3ED (GB); Sharp, Jonathan, Sunningdale, Berkshire SL4 0BB (GB); Hewlett, Dean, Rotherwick, Hapmshire RG27 9BW (GB); Thomas, Graham, Camberley, Surrey GU14 1QS (GB); Nicholas, Andrew, Bracknell, Berkshire RG12 7RT (GB)
(74) Representative: Becker Kurig Straus

(56) References cited:
- EP-A- 0 853 287
- WO-A-00/76172
- WO-A-01/20844
- WO-A-02/17567
- WO-A-99/13661
- WO-A-99/55055
- "Wap white paper" AU-SYSTEM RADIO, February 1999 (1999-02), pages 1-22, XP002901226

## Description

The present invention relates to a client-server system, and more particularly to a way of downloading content between a client and a server.

A client-server system comprises a client terminal and a remote server. In the context of the present invention a client terminal consists in a portable radio communication device such as a mobile phone operating in a communications network. The server is located remotely from the client and is connected with the network. The client terminal and the server in the context of the present invention operate to transfer content and data between one another over the air by means of an air interface.

PCT/IB00/00826 discloses a cellular communication terminal, a system and a method for accessing servers. As disclosed therein the cellular communication terminal is arranged with a receiver and a transmitter, to receive and transmit data packets from at least one server through a linking means. The linking means is arranged to forward the data packets between the terminal and the server. The terminal is further arranged with a first memory having an identifier and at least one item. The item is provided with an access point, which indicates the location of the server to be accessed. The server is accessed by sending the access point and the identifier to the linking means to identify the content to be accessed. A browser application is arranged in the terminal, to establish a session to at least a first linking means, by reading an item from the first memory. Also, the terminal has a user interface connected to the browser application. The user interface includes a display means for displaying content and a user input means to control the browser application.

WAP white paper, AU-System Radio, February 1999 explains the Wireless Application Protocol (WAP). As explained, WAP introduces the concept of the Internet as a wireless service platform and provides a means to create not only services that are used on the World Wide Web (WWW), but also telephony services. As also explained, WAP uses a WAP protocol suite which contains four protocols for handling the communication between clients and a WAP Gateway/Proxy. As further explained, some of the key features of WAP consist of re-use of concepts found on the Internet which enable a quick introduction of WAP based services. Additionally, as explained, WAP uses a wireless markup language (WML) for authoring services fulfilling the same purpose that the HyperText Markup Language (HTML) achieves on the WWW; however WML is designed to fit small handheld devices.

Against this background and in one aspect, the present inventions provides a client-server system as set out in claim 1.

By means of the invention, an end user can obtain new secure content for use on his/her terminal from a server quickly, efficiently, and with minimal user input That is to say, the user is able to download content from a server to his/her terminal without having to carry out a large number of steps on his terminal (such as key depressions) in order to do so.

In a specific example, a WAP enabled user terminal (e.g. mobile phone) has stored on a memory thereof an electronic game which the user can play by means of the phone's Games menu software and user interface (e.g. LCD, keys, etc). After a number of plays, the user may wish to have on his/her phone a new (or modified) version of the game (e.g. new level), which new version is available for downloading from a server of the games provider. Accordingly, in a specific arrangement of the present invention, there is provided, as a selectable option embedded in the Games sub-menu, a direct games services link, which the user can select to effect connection to the server. This directly activates, via the phone's WAP browser, a transmission from the mobile phone to the Games server comprising a request for a new games download. This request is received at the server, processed by the server and then if appropriate the requested games download is transmitted by the server via the network to the user's terminal. At the terminal, the new game's download is received, processed and stored on the phone's memory as the default version of that particular game. The whole process advantageously is automatic: the user is required only to initiate the request for the new game's download using the direct games services link in the Games sub-menu, and the remaining steps of contacting the games server, downloading, and storing and setting the new games download as default is accomplished without the user having to perform a great many further operations. Hence, in so far as the user is concerned the whole process of obtaining games downloads level is a seamless one.

In this Games download example, the advantages are achieved by the provision primarily of a combination in the mobile phone of a direct games services link in the Games sub-menu and a secure games download authentication means. Because of the direct games services link, the user does not need directly to navigate to and open the mobile phone's WAP browser, and because of the download authentication means, the phone carries out security checks on the games download received from server and if recognised as the coming from a secure source is saved directly in the mobile phone memory as the default version of the game.

The present invention is not limited, in respect of the requesting, downloading and security functionality, to just Games Services, but applies more generally to all forms of multi-media applications services such as music and images.

Other aspects and features of the invention are defined in the appended claims.

In order to aid a better understanding of the present invention, an embodiment of the invention will now be described. This should not be construed as limiting the invention, but merely as an example of a specific way of putting the invention into effect. In particular, the invention will be described with reference to the accompanying drawings in which:
Figure 1 is a schematic of client-server system in accordance with a preferred arrangement of the present invention;
Figure 2 is a block diagram illustrating selected functional aspects of the client server system of Figure 2;
Figure 3 is a flow chart outlining a preferred way of effecting downloading of content in the client-server system of Figures 1 and 2,
Figure 4 is a hierarchy illustrating a server side download structure;
Figure 5 is a hierarchy illustrating a games data file structure; and
Figure 6 is a game data file structure.

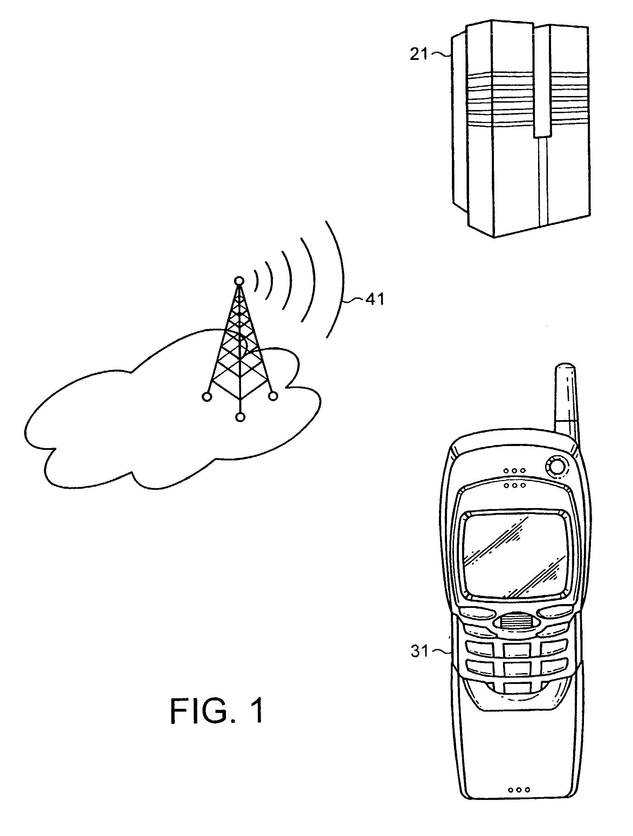

Figure 1 outlines three entities of the present invention, namely a server 21 that holds content for downloading, an end user's mobile phone 31 that is able to download the content, and an operator network 41 that provides a telecommunications service to the mobile phone 31. The server 21 has a unique URL address and using this can be accessed by the end user through the mobile phone 31 which may be WAP or iMODE enabled.

As indicated previously, electronic games software is one example of content for a mobile phone platform, and in the following example reference will be made to mobile gaming and games content, although the invention is in no way intended to be limited to mobile gaming and games content.

Mobile gaming is a term used to refer to all aspects of electronic games in the context of mobile communications. It is not uncommon nowadays for mobile phones to have, pre-loaded on a memory of the phone, content relating to one or more electronic games. The games can be played on the mobile phone through the phone's User Interface normally involving the use of the LCD and one or more of the keys. In order to play a game, the user navigates through the phone's various main menu options to the Games option and then selects the particular electronic game he or she wishes to play. Certain keys of the mobile phone's keypad will be preassigned for enabling the user to control certain predetermined features of the game, usually in relation to other features of the game which are under the control of the software of the game. In this way, the user can be regarded as playing 'against the computer'. Additionally, in a two (or more) player game, each user (player) has control over his/her particular game's characters or features with which he/she plays against the other player(s).

In general terms, an electronic game that is designed to be played on a mobile phone is created by a content provider, who may be the mobile phone manufacturer or a third party. Typically, the electronic game comprises a games engine that provides the general functions of the game including instructions and routines for gameplay, for example by drawing of library functions that define how games characters may interact during game play. The electronic game also has gaming parameters that set out the environmental factors that define the backdrop to the game. Then there are gaming parameters relating to characters of the games, these being entities of the game under user control and with which the user during gameplay associates himself, for instance a team in a sports game, or a fighter in a combat game. In the games content, a combination of these factors define the look and feel of the game, its characters, its objectives, its rules of operation.

In order to afford variation in gameplay, in-built into the games software, typically, is the ability to have different levels of gameplay ranging in complexity. This is usually implemented in the software by making changes to characters, features, aspects and other parameters of the basic gameplay. The content provider additionally creates new levels and/or versions for the game. When new levels and/or versions are applied to the game it modifies the games content. Modified games content has associated with it an identifier tag that identifies the version that has been used in its construction.

The mobile phone manufacturer may embed the games content onto the phone during manufacture, or authorise downloading of the games content onto the phone. Thus the user of the mobile phone is equipped for mobile gaming.

Turning to the end user, the end user is provided with a mobile phone 31 carrying the original games content, and the phone is provided a wireless communication service through the games operator network 41. The end user may begin playing the embedded game in either a stand-alone fashion or interactively with other users. After a number of plays of the game, the user will, in the majority of cases, become increasingly proficient at the game. After continued play, and depending on the skill and ability of the particular user, the end user will most probably master the game. At this stage, ordinarily the challenge of the game would fade and the user would lose interest in the game. However, by means of the preferred arrangement of the invention the user has the option to download from the mobile phone manufacturer's server 21 new levels and/or versions so as to create a new and/or more difficult or different level. The end user accordingly requests using a direct games services link in the Games sub-menu, the download of new levels and/or versions from the server 21 via the operator's network 41. The server 21 holds files of specific type containing the games data. Selecting one of those files results in the download of the file to the mobile phone. After validation by the games engine and game itself by means of a security and authentication process, the games data file is installed to the mobile phone's permanent memory. A more detailed description of this process now follows.

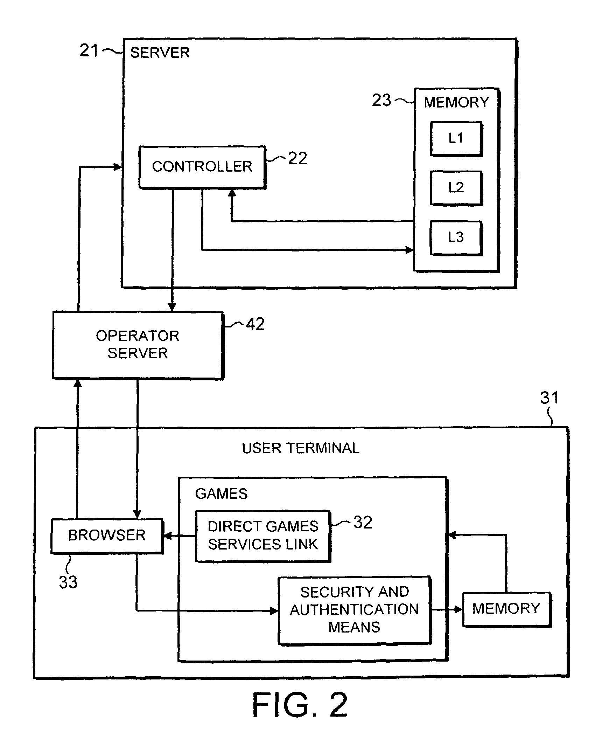

Referring to Figure 2, there is shown the end user mobile phone terminal 31, which through the operator network having an operator server 42 can access the mobile phone manufacturer's server 21 having a memory containing downloadable files corresponding to new levels and/or versions (L1, L2, L3) of a particular electronic game. An end user 31 wishing to connect to the server 21 to obtain a games download selects a direct games service link 32 provided as one of the selectable alternatives in the Games sub-menu, for example a selectable menu item called "On-line" (or something similar). The direct games service link is a menu-driven option embedded in the Games sub-menu structure. When the user selects the "On-line" menu item, the software functions to launch the mobile phone's browser 33 (e.g. WAP browser) and load into it a pre-determined URL identification, thus automatically activating a connection to that addressed URL server in order to send a download request to the server. For example a user of Nokia's 3340 phone would select "On-line" from within the Games sub-menu and this would launch the browser to load a file, e.g. www.clubnokia.com/games/3340/index.wml. It may be that the "3340" portion of this example URL, is not included in the file definition, but instead this information is derived by the server from the information which the phone's browser presents to the server.

Alternatively or additionally, the direct games services link option may be configured to appear on the LCD automatically on successful completion of a particular game level. The user could in this case then elect to download the next level without having to return to the Games sub-menu.

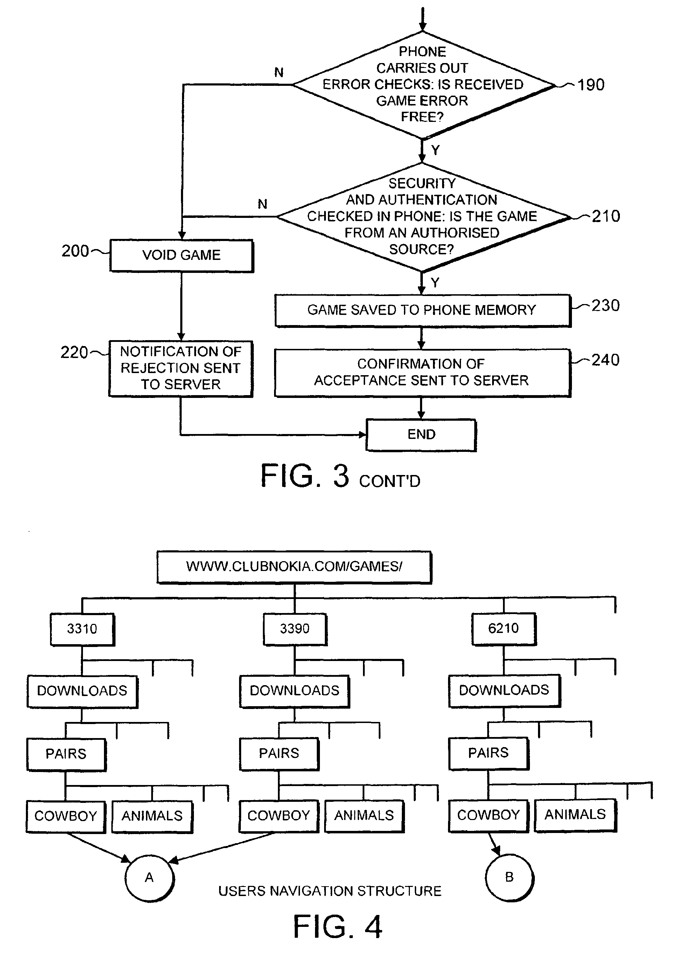

As indicated above, part of the request may contain a location identifier that, based on pre-programmed characteristics of the mobile phone, serves to place the user at the appropriate part of the server (e.g. automatically at the top of the navigation tree for the user's phone, describe later in relation to Figure 4). Thus, the server is configured to detect the phone type from the information passed to the server by the WAP browser. This allows the server to present the right options/data for that particular phone type. The user can thus access the content in an efficient manner.

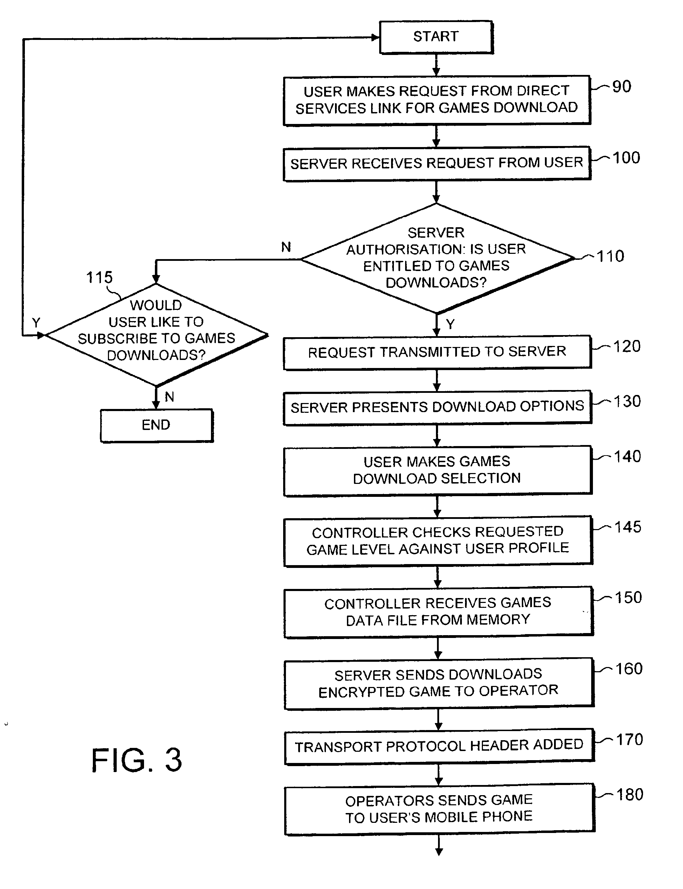

The user's request is received first by the network operator at the operator server 42, this is indicated in Figure 3 at block 100. Here a series of checks is carried out in relation to the request in an operator authentication process. As indicated at block 110 in Figure 3, it is checked whether the user subscribes to the appropriate tariff to entitle him/her to access the server in order to obtain the requested service. Accordingly, the user's identity is checked along with his/her tariff subscription. If a positive determination is made, i.e. that the user does subscribe to the appropriate tariff, the operator server forwards the request to the URL address identifying the mobile phone manufacturer's games server 21, as indicated at block 120.

If, on the other hand, the user is identified as not being a subscriber on the appropriate tariff to be allowed the desired service flow passes to block 115 in which the operator server sends a message to the user denying him/her the request. At this juncture, the message may contain information informing the user of steps he may take in order to apply to subscribe to the correct tariff for obtaining games downloads. If at block 115 the user agrees to the appropriate tariff he completes the necessary subscription requirements and flow returns to START.

Returning to the situation where the network operator accepts the user and engages the manufacturer's server to service the request, the user's request received at the server undergoes further authentication and identification at block 130, for instance to check for compatibility between the user's mobile phone and the games download requested. This may be on the basis of an identifier tag associated with the user's terminal software.

On successful authentication at the server, the server provides access to data files that the phone will download via the browser and accordingly may present the user with a series of choices as to which version or level (e.g. L1, L2, or L3) the user would like to download. The server may offer further information on each of the downloadable files. The server is equipped to deal with multiple phone types needing to access similar types of data, or in some cases the same data. The data may or may not be different for each of the phone types (for instance Nokia's 3330 and 3390 mobile phones are variants of the same phone and so in order to support data download for these phones, the content is identical. Conversely, if Nokia's 6210 mobile phone supported data download for the same game as the 3330 mobile phone, the content would be different since the screen resolutions for the two mobile phone models differ. Thus, in order to access the games server there is a common root URL for all the games services, with a means for differentiating content such as a sub-directory for each mobile phone type, as illustrated in Figure 4. Within that structure, the user browses URLs to locate the required downloadable data content. The links when browsing may in some cases take the user to data files that are common with other phones. Within the server memory, games data files are advantageously organised within a common area for downloads by mobile phone model type. This requires sub-division by data version which is used to differentiate such things as screen size differences.

Figure 4 gives an example of a user navigation structure for data download for the Nokia game Pairs2 in respect of mobile phone models 3310, 3390 (which have the same data content) and 6210 (which has different content). The illustrated user navigation structure does not necessarily imply that this structure exists as a directory hierarchy on the server, but this is the navigatable structure presented by the WML accessed via the mobile phone browser. In other words, from the header information contained in the request the server can identify the browser for the phone type making the request. This may be by using an initial file which is loaded when accessing the services for that phone type (perhaps 'index.wml'). This file then allows the user to browse the structure shown in Figure 4. The exact composition of the Pairs2 decks and cards that is presented to the server is a matter for server implementation.

The user then makes a selection of the required version. This is indicated at block 140.

Alternatively, the server may detect what version/level is currently stored on the user's handset by virtue of a games level identifier tag that accompanies the user's games download request, and on that basis only allow the user to download the next successive version/level.

The selected games download then undergoes further processing in the server. Initially, the selection passes to a controller 22 in Figure 2 that checks at block 145 in Figure 3 that the requested game is the appropriate one for the particular user to play. For instance, if the user is a novice at a particular game the server ensures that the game to be sent to the user is the level 1 (i.e. easiest) version of the game.

Such a check may be made by reference to a user profile that may be stored on the server (for example based on some pre-existing registration), or uploaded to the server from the phone. The games controller 22 then accesses the memory storage 23 holding the appropriate games download data file using a memory address, and from there retrieves a copy of the games download file, as indicated at block 150 in Figure 3. Following appropriate checks, the games download file is dispatched from the server and transmitted according to block 160 via the operator server 42 to the mobile phone. In downloading the games data file, the transport protocol presents certain pre-determined codes or qualifiers with the data file which serve to provide an indication of the server's identity, this is indicated at block 170. Specifically, the HTTP header may indicate, through use of a specific mime type in a form such as: "Content-Type: application/X-NokiaGameData", the type of data that is being downloaded. This provides information on what processes can be applied to the file. When received, this indicates to the mobile phone that the games engine should receive this content. Furthermore, the originating URL of the game data may be used as a means of validating the authenticity of the data. The mime type is used advantageously for any number of games which the mobile phone's game engine may support, by removing the need to define a new mime type for each game.

On receipt of the games download file at the mobile phone, a message is displayed on the phone's LCD indicating that the games download has been delivered. The mobile phone's processor carries out a series of error checks to ensure that all the data has been faithfully received (block 190 in Figure 3), if not a void games data file is registered at block 200. In addition to the error checks, the mobile phone's processor invokes a security and authentication process, as given by block 210. In this process, the phone checks that the correct games download file has been received and from the correct server.

To carry out the security and authentication process, the mobile phone's browser is configured to examine the information passed between the server and the phone and more particularly to recognise and accept a file type for games download data (e.g. for Nokia games download data). Specifically, the games download data file is recognised by the browser by the mime type (e.g. application/x-Nokia-GameData) and can be passed first to the game engine and then by the game engine to the specific game for security and authentication checks.

The browser calls a handler from the games engine to process the games download data file. The handler is based on the transport mechanism employed in the mobile phone (e.g. WAP, SMS or iMODE) and serves to signal the arrival of data.

By calling on the handler, part of the authentication is performed by the games engine, and another part is performed by the game itself since only the game itself can recognise certain play features of the game.

If the browser sends the game application the source URL in the message with the data a check is made that the source is valid e.g. www.clubnokia.com/games/, and the content may be rejected if it is deteremined from the check that it has not been sent from a valid source. Accordingly, if the games download file is verified as being from an authentic source, it is accepted, if not the games download is rejected as void data.

If void game data is registered a notification is sent to the server via the operator of the rejected game (block 220). If the games download data file is accepted, it is stored to the mobile phone's memory, as shown at block 230 in Figure 3.

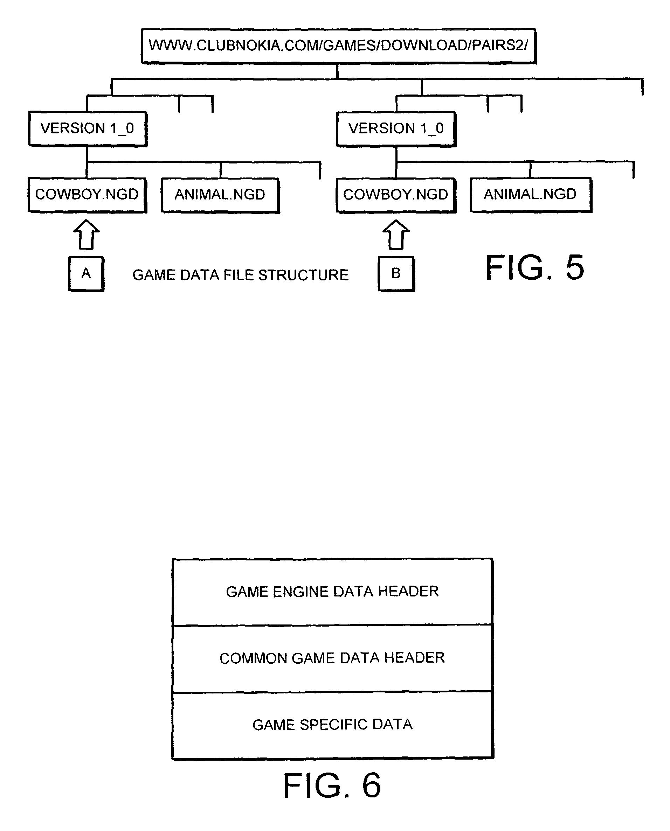

### The downloaded game data file structure is described with reference to Figure 6:

Game engine data header: Data used by the game engine to validate the file and route the data to the correct game; Common game data header: data used by all games to validate the file and identify it; Game specific data: the data actually used when running the game to revise the gameplay.

Storage onto the phone's memory, may be carried out by the user through use of the menu options to save the game onto the phone memory. Alternatively, there may be automatic saving to memory on verification of error free receipt of a secure game. The data file would be stored in a part of memory that does not depend upon the phone remaining powered up, or with a charged battery.

Storing the games download into the mobile phone memory modifies the previously stored games data for instance by overwriting library data or aspects of in-game data to provide modified content thereby avoiding taking up substantially extra memory space.

The step of saving the games download on the phone causes a signal to be transmitted to the server via the operator that the games download has been accepted and saved in the mobile phone memory. This acts as a confirmation of receipt and acceptance by the user as shown at block 200.

Transfer of signals between the user's mobile phone and the server may use any appropriate modes such as WAP and SMS, advantage being taken of security protocols established under these modes. For example, in order to establish a secure session between the server and the mobile phone there may be an exchange of public keys, followed an exchange of secret keys.

Thus it should be noted that this specific embodiment of the invention, determines whether or not the received games download is from a 'trusted' server, and this accordingly blocks downloading of games content from unauthorised sources. A trusted server is one that the mobile phone recognises is a server authorised to provide content for download to the mobile phone, and this may be on the basis of information pre-loaded, flashed or even downloaded to the phone's memory, and may be implemented for example in the form of a look-up table. Advantageously, the invention provides a safeguard against the content crashing the phone.

Various arrangements are envisaged for schemes for payment by the user for the downloaded content. One arrangement is to set a limit in the server of number of times a single user could download a purchased piece of data. This would require database entries in the server to track which users had downloaded which data and monitor how many times the content has been downloaded. The same data could be downloaded again by paying again. This allows for reloading of data. Another arrangement is to have the games engine keep track of data it had ever downloaded. Whenever data was detected which was not previously registered on that mobile phone, the phone would prompt the user to send a message (e.g. SMS) to the server with a pre-defined message. This message may contain the data identification and a reverse billing process is set up on the received messages to the server. Then instead of paying initially for the data content, the user gets billed for the act of "unlocking" it on the device.

It should be understood that the specific description given above provides merely one way of embodying the present invention, and that the present invention may be used in other forms and for other types of content download without departing from its essential attributes.

Thus, reference should thus be made to the appended claims and other general statements herein rather than to the foregoing description as indicating the scope of the invention.

Furthermore, each feature disclosed in this specification (which terms includes the claims) and/or shown in the drawings may be incorporated in the invention independently of other disclosed and/or illustrated features. In this regard, the invention includes any novel feature or combination of features disclosed herein either explicitly or any generalisation thereof irrespective of whether or not it relates to the claimed invention or mitigates any or all of the problems addressed.

The appended abstract as file herewith is included in the specification by reference.

## Claims

1. A client-server system comprising
a client terminal and a remote server (21), wherein the client terminal (31) comprises a portable radio communication device (31) having a user interface and authentication means,
**characterized in that** the user interface comprises a plurality of user selectable menu applications and a browser application (33), and is operable to request a content file which comprises validation data and other data stored at the server (21, 23), wherein one or more of the menu applications includes, embedded in a sub-menu thereof, a user selectable direct download link (32) comprising the server address, wherein in response to user selection of the direct download link from the sub-menu the browser application (33) controls the radio communication device (31) to transmit a signal to connect to the server (21),
and the authentication means comprising means for checking said validation data of content downloaded from the server (21), and wherein the server (21) comprises means for downloading said content file to the portable radio communication device (31) wherein said validation data is associated with said content so as to be identifiable by said authentication means as originating from the server (31).

2. A system as defined in claim 1, **characterized in that** the validation data identifies the server (21) and indicates to the authentication means whether the content is accepted by the portable radio communication device (31).

3. A system as defined in claim 1 or 2, **characterized in that** the authentication means carries out a series of error checks to verify that the content file was received from the server and when the authentication means determines that the content file was not received from the server, the portable radio communication device sends another request for the content stored at the server.

4. A system as defined in any of claims 1 to 3, **characterized in that** the content is rejected by the authentication means if the authentication means determines from the validation data that the content did not originate from the server (21).

5. A system as defined in any of claims 1 to 4, **characterized in that** the content is installed on the portable communication device (31) after the content is validated by the authentication means as originating from the server (21).

6. A system as defined in any of claims 1 to 5, **characterized in that** the authentication means uses the validation data of the content to authenticate the other data.

7. A client terminal comprising a portable radio communication device (31) having a user interface and authentication means, the user interface comprising a plurality of user selectable menu applications and a browser application (33),
**characterized in that**
the browser application is operable to request a content file which comprises validation data and other data stored at the server (21), wherein one or more of the menu applications includes, embedded in a sub-menu thereof, a user selectable direct download link (32) comprising the server address, wherein in response to user selection of the direct download link (32) from the sub-menu the browser application (33) controls the radio communication device (31) to transmit a signal to connect to the server (21), and the authentication means comprising means for security checking the validation data of the content file downloaded from the server (21).

8. A terminal as defined in claim 7, **characterized in that** the validation data identifies the server (21) and indicates to the authentication means whether the content is accepted by the portable radio communication device (31).

9. A terminal as defined in claim 7 or 8, **characterized in that** the security checking comprises determining whether or not the downloaded content is from a trusted server (21).

10. A terminal as defined in any of claims 7 to 9, **characterized in that** the authentication means carries out a series of error checks to verify that the content file was received from the server and when the authentication means determines that the content file was not received from the server, the portable radio communication device sends another request for the content file stored at the server.

11. A terminal as defined in any of claims 7 to 10, **characterized in that** the content is rejected by the authentication means if the authentication means determines from the validation data that the content file did not originate from the server (21).

12. A terminal as defined in any of claims 7 to 11, **characterized in that** the content is installed on the portable communication device (31) after the content file is validated by the authentication means as originating from the server (21).

13. A terminal as defined in any of claims 7 to 12, **characterized in that** the authentication means uses the validation data of the content file to authenticate the other data.

14. A system or terminal as defined in any preceding claim, wherein the terminal (31) comprises means automatically, after said checking of the validation data, for storing the downloaded content to a memory of the terminal (31) as a default memory setting.

15. A system or terminal as defined in any preceding claim, wherein said validation data comprises download transport protocol HTTP header and the authentication means examines said header.

16. A system or terminal as defined in claim 15, **characterized in that** the download transport protocol HTTP header comprises a mime type.

17. A computer program product on a portable radio communication device (31) for downloading content files to the communication device from a server, the communication device comprising a user interface comprising a plurality of user selectable menu applications and a browser application (33),
**characterized in that** one or more of the menu applications includes, embedded in a sub-menu thereof, a user selectable direct download link (32) comprising a server address, wherein in response to user selection of the direct download link from the sub-menu the browser application (33) controls the radio communication device (31) to transmit a signal to connect to the server (21), the computer program product comprising at least one computer-readable storage medium having computer-readable program code portions stored therein, the computer-readable program code portions comprising,
a first executable portion configured to select said direct download link (32) from the sub-menu so as to request the content file stored at the server (21);
a second executable portion configured to process and download the content file, which comprises validation data and other data, from the server (21) to the communication device (31), and
a third executable portion configured to security check the content file downloaded from the server (21) based on the validation data.

18. A computer program product as defined in claim 17, **characterized in that** the portable communication device (31) further comprises an authentication means and wherein the validation data identifies the server (21) and indicates to the authentication means whether the content is accepted by the portable communication device (31).

19. A computer program product as defined in claim 17 or 18, **characterized in that** the security checking comprises determining whether or not the downloaded content is from a trusted server (21).

20. A computer program product as defined in any of claims 17 to 19, **characterized in that** the authentication means carries out a series of error checks to verify that the content was received from the server and when the authentication means determines that the content was not received from the server, the portable radio communication device sends another request for the content stored at the server.

21. A computer program product as defined in any of claims 17 to 20, **characterized in that** the portable communication device (31) comprises an authentication means and wherein the content is rejected by the authentication means if the authentication means determines from the validation data that the content did not originate from the server (21).

22. A computer program product as defined in any of claims 17 to 21, **characterized in that** the portable communication device (31) comprises an authentication means and wherein the content is installed on the portable communication device (31) after the content is validated by the authentication means as originating from the server (21).

23. A computer program product as defined in any of claims 17 to 22, **characterized in that** the portable communication device (31) comprises an authentication means which uses the validation data of the content to authenticate the other data.

24. A method for downloading content to a client terminal consisting of a portable radio communication device (31) from a server (21), the portable radio communication device (31) having a user interface comprising a plurality of user selectable menu applications and a browser application (33),
**characterized in that** one or more of the menu applications includes, embedded in a sub-menu thereof, a user selectable direct download link (32) comprising the server address, wherein in response to user selection of the direct download link (32) from the sub-menu, the browser application (33) controls the radio communication device (31) to transmit a signal to connect to the server (21), the method comprising
selecting said direct download link (32) from the sub-menu so as to request a content file stored at the server (21),
processing and downloading the content file, which comprises validation data and other data, from the server (21) to the portable radio communication device (31), and
security checking the validation data of the content file downloaded from the server.

25. A method as defined in claim 24, **characterized in that** the portable communication device (31) further comprises an authentication means and wherein the validation data identifies the server (21) and indicates to the authentication means whether the content is accepted by the portable communication device (31).

26. A method as defined in claim 24 or 25, **characterized in that** the authentication means carries out a series of error checks to verify that the content was received from the server and when the authentication means determines that the content was not received from the server, the portable radio communication device sends another request for the content stored at the server.

27. A method as defined in any of claims 24 to 26, **characterized in that** the portable communication device (31) comprises an authentication means and wherein the content is rejected by the authentication means if the authentication means determines from the validation data that the content did not originate from the server (21).

28. A method as defined in any of claims 24 to 27, **characterized in that** the portable communication device (31) comprises an authentication means and wherein the content is installed on the portable communication device (31) after the content is validated by the authentication means as originating from the server (21).

29. A method as defined in claim any of claims 24 to 28, **characterized in that** the portable communication device (31) comprises an authentication means and wherein the authentication means uses the validation data of the content to authenticate the other data.

## Patentansprüche

1. Client-Server-System, das Folgendes umfasst:
ein Client-Endgerät und einen Remoteserver (21), wobei das Client-Endgerät (31) ein tragbares Funkkommunikationsgerät (31) umfasst, das eine Benutzerschnittstelle und ein Authentifizierungsmittel aufweist,
**dadurch gekennzeichnet, dass** die Benutzerschnittstelle mehrere durch den Benutzer auswählbare Menüanwendungen und eine Browseranwendung (33) umfasst und geeignet ist, eine Inhaltsdatei anzufordern, die Validierungsdaten und weitere auf dem Server (21, 23) gespeicherte Daten umfasst, wobei eine oder mehrere der Menüanwendungen, in ein Untermenü eingebettet, einen durch den Benutzer auswählbaren Direkt-Downloadlink (32) enthalten, der die Serveradresse umfasst, wobei - in Reaktion auf eine Benutzerauswahl des Direkt-Downloadlinks aus dem Untermenü - die Browseranwendung (33) das Funkkommunikationsgerät (31) veranlasst, ein Signal zu übertragen, um eine Verbindung zu dem Server (21) herzustellen,
und wobei das Authentifizierungsmittel ein Mittel umfasst, um die Validierungsdaten von Inhalten, die von dem Server (21) heruntergeladen wurden, zu überprüfen, und wobei der Server (21) ein Mittel zum Herunterladen der Inhaltsdatei zu dem tragbaren Funkkommunikationsgerät (31) umfasst, wobei die Validierungsdaten dergestalt mit den Inhalten verknüpft sind, dass sie durch das Authentifizierungsmittel als von dem Server (31) stammend identifizert werden können.

2. System nach Anspruch 1, **dadurch gekennzeichnet, dass** die Validierungsdaten den Server (21) identifizieren und dem Authentifizierungsmittel anzeigen, ob die Inhalte durch das tragbare Funkkommunikationsgerät (31) angenommen wurden.

3. System nach Anspruch 1 oder 2, **dadurch gekennzeichnet, dass** das Authentifizierungsmittel eine Reihe von Fehlerprüfungen ausführt, um zu verifizieren, dass die Inhaltsdatei von dem Server kommend empfangen wurde, und wobei, wenn das Authentifizierungsmittel feststellt, dass die Inhaltsdatei nicht von dem Server kommend empfangen wurde, das tragbare Funkkommunikationsgerät eine weitere Anforderung für die auf dem Server gespeicherten Inhalte sendet.

4. System nach einem der Ansprüche 1 bis 3, **dadurch gekennzeichnet, dass** die Inhalte durch das Authentifizierungsmittel zurückgewiesen werden, wenn das Authentifizierungsmittel anhand der Validierungsdaten feststellt, dass die Inhalte nicht von dem Server (21) stammen.

5. System nach einem der Ansprüche 1 bis 4, **dadurch gekennzeichnet, dass** die Inhalte auf dem tragbaren Kommunikationsgerät (31) installiert werden, nachdem das Authentifizierungsmittel validiert hat, dass die Inhalte von dem Server (21) stammen.

6. System nach einem der Ansprüche 1 bis 5, **dadurch gekennzeichnet, dass** das Authentifizierungsmittel die Validierungsdaten der Inhalte nutzt, um die anderen Daten zu authentifizieren.

7. Client-Endgerät, das ein tragbares Funkkommunikationsgerät (31) umfasst, das eine Benutzerschnittstelle und ein Authentifizierungsmittel aufweist, wobei die Benutzerschnittstelle mehrere durch den Benutzer auswählbare Menüanwendungen und eine Browseranwendung (33) umfasst,
**dadurch gekennzeichnet, dass**
die Browseranwendung geeignet ist, eine Inhaltsdatei anzufordern, die Validierungsdaten und weitere auf dem Server (21) gespeicherte Daten umfasst, wobei eine oder mehrere der Menüanwendungen, in ein Untermenü eingebettet, einen durch den Benutzer auswählbaren Direkt-Downloadlink (32) enthalten, der die Serveradresse umfasst, wobei - in Reaktion auf eine Benutzerauswahl des Direkt-Downloadlinks (32) aus dem Untermenü - die Browseranwendung (33) das Funkkommunikationsgerät (31) veranlasst, ein Signal zu übertragen, um eine Verbindung zu dem Server (21) herzustellen, und wobei das Authentifizierungsmittel ein Mittel umfasst, um eine Sicherheitsüberprüfung der Validierungsdaten der von dem Server (21) heruntergeladenen Inhaltsdatei auszuführen.

8. Endgerät nach Anspruch 7, **dadurch gekennzeichnet, dass** die Validierungsdaten den Server (21) identifizieren und dem Authentifizierungsmittel anzeigen, ob die Inhalte durch das tragbare Funkkommunikationsgerät (31) angenommen werden.

9. Endgerät nach Anspruch 7 oder 8, **dadurch gekennzeichnet, dass** die Sicherheitsüberprüfung die Feststellung umfasst, ob die heruntergeladenen Inhalte von einem vertrauenswürdigen Server (21) stammen oder nicht.

10. Endgerät nach einem der Ansprüche 7 bis 9, **dadurch gekennzeichnet, dass** das Authentifizierungsmittel eine Reihe von Fehlerprüfungen ausführt, um zu verifizieren, dass die Inhaltsdatei von dem Server kommend empfangen wurde, und wobei, wenn das Authentifizierungsmittel feststellt, dass die Inhaltsdatei nicht von dem Server kommend empfangen wurde, das tragbare Funkkommunikationsgerät eine weitere Anforderung für die auf dem Server gespeicherte Inhaltsdatei sendet.

11. Endgerät nach einem der Ansprüche 7 bis 10, **dadurch gekennzeichnet, dass** die Inhalte durch das Authentifizierungsmittel zurückgewiesen werden, wenn das Authentifizierungsmittel anhand der Validierungsdaten feststellt, dass die Inhaltsdatei nicht von dem Server (21) stammt.

12. Endgerät nach einem der Ansprüche 7 bis 11, **dadurch gekennzeichnet, dass** die Inhalte auf dem tragbaren Kommunikationsgerät (31) installiert werden, nachdem das Authentifizierungsmittel validiert hat, dass die Inhaltsdatei von dem Server (21) stammt.

13. Endgerät nach einem der Ansprüche 7 bis 12, **dadurch gekennzeichnet, dass** das Authentifizierungsmittel die Validierungsdaten der Inhaltsdatei nutzt, um die anderen Daten zu authentifizieren.

14. System oder Endgerät nach einem der vorangehenden Ansprüche, wobei das Endgerät (31) ein Mittel umfasst, um nach dem Überprüfen der Validierungsdaten die heruntergeladenen Inhalte automatisch - als Standard-Speichereinstellung - in einem Speicher des Endgerätes (31) zu speichern.

15. System oder Endgerät nach einem der vorangehenden Ansprüche, wobei die Validierungsdaten einen Download-Transportprotokoll-HTTP-Header umfassen und das Authentifizierungsmittel den Header untersucht.

16. System oder Endgerät nach Anspruch 15, **dadurch gekennzeichnet, dass** der Download-Transportprotokoll-HTTP-Header einen MIME-Typ umfasst.

17. Computerprogrammprodukt in einem tragbaren Funkkommunikationsgerät (31) zum Herunterladen von Inhaltsdateien zu dem Kommunikationsgerät von einem Server, wobei das Kommunikationsgerät eine Benutzerschnittstelle umfasst, die mehrere durch den Benutzer auswählbare Menüanwendungen und eine Browseranwendung (33) umfassen,
**dadurch gekennzeichnet, dass** eine oder mehrere der Menüanwendungen, in ein Untermenü eingebettet, einen durch den Benutzer auswählbaren Direkt-Downloadlink (32) enthalten, der eine Serveradresse umfasst, wobei - in Reaktion auf eine Benutzerauswahl des Direkt-Downloadlinks aus dem Untermenü - die Browseranwendung (33) das Funkkommunikationsgerät (31) veranlasst, ein Signal zu übertragen, um eine Verbindung zu dem Server (21) herzustellen, wobei das Computerprogrammprodukt mindestens ein computerlesbares Speichermedium umfasst, auf dem computerlesbare Programmcodeabschnitte gespeichert sind, wobei die computerlesbaren Programmcodeabschnitte Folgendes umfassen:
einen ersten ausführbaren Abschnitt, der dafür konfiguriert ist, den Direkt-Downloadlink (32) aus dem Untermenü auszuwählen, um die auf dem Server (21) gespeicherte Inhaltsdatei anzufordern;
einen zweiten ausführbaren Abschnitt, der dafür konfiguriert ist, die Inhaltsdatei, die Validierungsdaten und weitere Daten umfasst, von dem Server (21) zu dem Kommunikationsgerät (31) herunterzuladen und zu verarbeiten, und
einen dritten ausführbaren Abschnitt, der dafür konfiguriert ist, die von dem Server (21) heruntergeladene Inhaltsdatei anhand der Validierungsdaten einer Sicherheitsüberprüfung zu unterziehen.

18. Computerprogrammprodukt nach Anspruch 17, **dadurch gekennzeichnet, dass** das tragbare Kommunikationsgerät (31) des Weiteren ein Authentifizierungsmittel umfasst und wobei die Validierungsdaten den Server (21) identifizieren und dem Authentifizierungsmittel anzeigen, ob die Inhalte durch das tragbare Kommunikationsgerät (31) angenommen werden.

19. Computerprogrammprodukt nach Anspruch 17 oder 18, **dadurch gekennzeichnet, dass** die Sicherheitsüberprüfung die Feststellung umfasst, ob die heruntergeladenen Inhalte von einem vertrauenswürdigen Server (21) stammen oder nicht.

20. Computerprogrammprodukt nach einem der Ansprüche 17 bis 19, **dadurch gekennzeichnet, dass** das Authentifizierungsmittel eine Reihe von Fehlerprüfungen ausführt, um zu verifizieren, dass die Inhalte von dem Server kommend empfangen wurden, und wobei, wenn das Authentifizierungsmittel feststellt, dass die Inhalte nicht von dem Server kommend empfangen wurden, das tragbare Funkkommunikationsgerät eine weitere Anforderung für die auf dem Server gespeicherten Inhalte sendet.

21. Computerprogrammprodukt nach einem der Ansprüche 17 bis 20, **dadurch gekennzeichnet, dass** das tragbare Kommunikationsgerät (31) ein Authentifizierungsmittel umfasst, und wobei die Inhalte durch das Authentifizierungsmittel zurückgewiesen werden, wenn das Authentifizierungsmittel anhand der Validierungsdaten feststellt, dass die Inhalte nicht von dem Server (21) stammen.

22. Computerprogrammprodukt nach einem der Ansprüche 17 bis 21, **dadurch gekennzeichnet, dass** das tragbare Kommunikationsgerät (31) ein Authentifizierungsmittel umfasst, und wobei die Inhalte auf dem tragbaren Kommunikationsgerät (31) installiert werden, nachdem das Authentifizierungsmittel validiert hat, dass die Inhalte von dem Server (21) stammen.

23. Computerprogrammprodukt nach einem der Ansprüche 17 bis 22, **dadurch gekennzeichnet, dass** das tragbare Kommunikationsgerät (31) ein Authentifizierungsmittel umfasst, das die Validierungsdaten der Inhalte nutzt, um die anderen Daten zu authentifizieren.

24. Verfahren zum Herunterladen von Inhalten von einem Server (21) zu einem Client-Endgerät, das aus einem tragbaren Funkkommunikationsgerät (31) besteht, wobei das tragbare Funkkommunikationsgerät (31) eine Benutzerschnittstelle aufweist, die mehrere durch den Benutzer auswählbare Menüanwendungen und eine Browseranwendung (33) umfasst,
**dadurch gekennzeichnet, dass** eine oder mehrere der Menüanwendungen, in ein Untermenü eingebettet, einen durch den Benutzer auswählbare Direkt-Downloadlink (32) enthalten, der die Serveradresse umfasst, wobei - in Reaktion auf eine Benutzerauswahl des Direkt-Downloadlinks (32) aus dem Untermenü - die Browseranwendung (33) das Funkkommunikationsgerät (31) veranlasst, ein Signal zu übertragen, um eine Verbindung zu dem Server (21) herzustellen, wobei das Verfahren Folgendes umfasst:
Auswählen des Direkt-Downloadlinks (32) aus dem Untermenü, um eine auf dem Server (21) gespeicherte Inhaltsdatei anzufordern,
Herunterladen der Inhaltsdatei, die Validierungsdaten und weitere Daten umfasst, von dem Server (21) zu dem tragbaren Funkkommunikationsgerät (31) und Verarbeiten dieser Datei, und
Sicherheitsüberprüfung der Validierungsdaten der von dem Server heruntergeladenen Inhaltsdatei.

25. Verfahren nach Anspruch 24, **dadurch gekennzeichnet, dass** das tragbare Kommunikationsgerät (31) des Weiteren ein Authentifizierungsmittel umfasst, und wobei die Validierungsdaten den Server (21) identifizieren und dem Authentifizierungsmittel anzeigen, ob die Inhalte durch das tragbare Kommunikationsgerät (31) angenommen werden.

26. Verfahren nach Anspruch 24 oder 25, **dadurch gekennzeichnet, dass** das Authentifizierungsmittel eine Reihe von Fehlerprüfungen ausführt, um zu verifizieren, dass die Inhalte von dem Server kommend empfangen wurden, und wobei, wenn das Authentifizierungsmittel feststellt, dass die Inhalte nicht von dem Server kommend empfangen wurden, das tragbare Funkkommunikationsgerät eine weitere Anforderung für die auf dem Server gespeicherten Inhalte sendet.

27. Verfahren nach einem der Ansprüche 24 bis 26, **dadurch gekennzeichnet, dass** das tragbare Kommunikationsgerät (31) ein Authentifizierungsmittel umfasst, und wobei die Inhalte durch das Authentifizierungsmittel zurückgewiesen werden, wenn das Authentifizierungsmittel anhand der Validierungsdaten feststellt, dass die Inhalte nicht von dem Server (21) stammen.

28. Verfahren nach einem der Ansprüche 24 bis 27, **dadurch gekennzeichnet, dass** das tragbare Kommunikationsgerät (31) ein Authentifizierungsmittel umfasst, und wobei die Inhalte auf dem tragbaren Kommunikationsgerät (31) installiert werden, nachdem das Authentifizierungsmittel validiert hat, dass die Inhalte von dem Server (21) stammen.

29. Verfahren nach einem der Ansprüche 24 bis 28, **dadurch gekennzeichnet, dass** das tragbare Kommunikationsgerät (31) ein Authentifizierungsmittel umfasst, und wobei das Authentifizierungsmittel die Validierungsdaten der Inhalte nutzt, um die anderen Daten zu authentifizieren.

## Revendications

1. Système client-serveur comprenant
un terminal client et un serveur distant (21), dans lequel le terminal client (31) comprend un dispositif de radiocommunication portable (31) ayant une interface utilisateur et un moyen d'authentification,
**caractérisé en ce que** l'interface utilisateur comprend une pluralité d'applications de menus sélectionnables par l'utilisateur et une application de navigateur (33), et est utilisable pour demander un fichier de contenu qui comprend des données de validation et d'autres données stockées au niveau du serveur (21, 23), dans lequel une ou plusieurs des applications de menus comprennent, incorporé à un sous-menu de cela, un lien de téléchargement direct sélectionnable par l'utilisateur (32) comprenant l'adresse de serveur, dans lequel en réponse à la sélection par l'utilisateur du lien de téléchargement direct dans le sous-menu, l'application de navigateur (33) commande au dispositif de radiocommunication (31) de transmettre un signal pour se connecter au serveur (21),
et le moyen d'authentification comprenant un moyen pour contrôler lesdites données de validation du contenu téléchargé du serveur (21), et dans lequel le serveur (21) comprend un moyen pour télécharger ledit fichier de contenu sur le dispositif de radiocommunication portable (31) dans lequel lesdites données de validation sont associées au dit contenu de manière à être identifiables par ledit moyen d'authentification comme provenant du serveur (31).

2. Système selon la revendication 1, **caractérisé en ce que** les données de validation identifient le serveur (21) et indiquent au moyen d'authentification si le contenu est accepté par le dispositif de radiocommunication portable (31).

3. Système selon la revendication 1 ou 2, **caractérisé en ce que** le moyen d'authentification effectue une série de contrôles d'erreur pour vérifier si le fichier de contenu a été reçu du serveur et lorsque le moyen d'authentification détermine que le fichier de contenu n'a pas été reçu du serveur, le dispositif de radiocommunication portable envoie une autre demande pour le contenu stocké au niveau du serveur.

4. Système selon l'une quelconque des revendications 1 à 3, **caractérisé en ce que** le contenu est rejeté par le moyen d'authentification si le moyen d'authentification détermine à partir des données de validation que le contenu ne provient pas du serveur (21).

5. Système selon l'une quelconque des revendications 1 à 4, **caractérisé en ce que** le contenu est installé sur le dispositif de communication portable (31) après que le contenu est validé par le moyen d'authentification comme provenant du serveur (21).

6. Système selon l'une quelconque des revendications 1 à 5, **caractérisé en ce que** le moyen d'authentification utilise les données de validation du contenu pour authentifier les autres données.

7. Terminal client comprenant un dispositif de radiocommunication portable (31) ayant une interface utilisateur et un moyen d'authentification, l'interface utilisateur comprenant une pluralité d'applications de menus sélectionnables par l'utilisateur et une application de navigateur (33),
**caractérisé en ce que**
l'application de navigateur est utilisable pour demander un fichier de contenu qui comprend des données de validation et d'autres données stockées au niveau du serveur (21), dans lequel une ou plusieurs des applications de menus comprennent, incorporé à un sous-menu de cela, un lien de téléchargement direct sélectionnable par l'utilisateur (32) comprenant l'adresse de serveur, dans lequel en réponse à la sélection par l'utilisateur du lien de téléchargement direct (32) dans le sous-menu, l'application de navigateur (33) commande au dispositif de radiocommunication (31) de transmettre un signal pour se connecter au serveur (21), et le moyen d'authentification comprenant un moyen pour effectuer un contrôle de sécurité des données de validation du fichier de contenu téléchargé du serveur (21).

8. Terminal selon la revendication 7, **caractérisé en ce que** les données de validation identifient le serveur (21) et indiquent au moyen d'authentification si le contenu est accepté par le dispositif de radiocommunication portable (31).

9. Terminal selon la revendication 7 ou 8, **caractérisé en ce que** le contrôle de sécurité comprend la détermination si le contenu téléchargé provient ou pas d'un serveur digne de confiance (21).

10. Terminal selon l'une quelconque des revendications 7 à 9, **caractérisé en ce que** le moyen d'authentification effectue une série de contrôles d'erreur pour vérifier que le fichier de contenu a été reçu du serveur et lorsque le moyen d'authentification détermine que le fichier de contenu n'a pas été reçu du serveur, le dispositif de radiocommunication portable envoie une autre demande pour le fichier de contenu stocké au niveau du serveur.

11. Terminal selon l'une quelconque des revendications 7 à 10, **caractérisé en ce que** le contenu est rejeté par le moyen d'authentification si le moyen d'authentification détermine à partir des données de validation que le fichier de contenu ne provient pas du serveur (21).

12. Terminal selon l'une quelconque des revendications 7 à 11, **caractérisé en ce que** le contenu est installé sur le dispositif de communication portable (31) après que le fichier de contenu est validé par le moyen d'authentification comme provenant du serveur (21).

13. Terminal selon l'une quelconque des revendications 7 à 12, **caractérisé en ce que** le moyen d'authentification utilise les données de validation du fichier de contenu pour authentifier les autres données.

14. Système ou terminal selon l'une quelconque des revendications précédentes, dans lequel le terminal (31) comprend un moyen pour, après ledit contrôle des données de validation, stocker automatiquement le contenu téléchargé dans une mémoire du terminal (31) en tant que réglage de mémoire par défaut.

15. Système ou terminal selon l'une quelconque des revendications précédentes, dans lequel lesdites données de validation comprennent un en-tête HTTP de protocole de transport de téléchargement et le moyen d'authentification examine ledit en-tête.

16. Système ou terminal selon la revendication 15, **caractérisé en ce que** l'en-tête http de protocole de transport de téléchargement comprend un type mime.

17. Produit de programme informatique sur un dispositif de radiocommunication portable (31) pour télécharger des fichiers de contenu d'un serveur sur le dispositif de communication, le dispositif de communication comprenant une interface utilisateur comprenant une pluralité d'applications de menus sélectionnables par l'utilisateur et une application de navigateur (33),
**caractérisé en ce qu'**une ou plusieurs des applications de menus comprennent, incorporé à cela, un lien de téléchargement direct sélectionnable par l'utilisateur (32) comprenant une adresse de serveur, dans lequel en réponse à la sélection par l'utilisateur du lien de téléchargement direct dans le sous-menu, l'application de navigateur (33) commande au dispositif de radiocommunication (31) de transmettre un signal pour se connecter au serveur (21), le produit de programme informatique comprenant au moins un support de stockage lisible par ordinateur dans lequel sont stockées des parties de code de programme lisibles par ordinateur, les parties de code de programme lisibles par ordinateur comprenant une première partie exécutable configurée pour sélectionner ledit lien de téléchargement direct (32) dans le sous-menu pour demander le fichier de contenu stocké au niveau du serveur (21) ;
une deuxième partie exécutable configurée pour traiter et télécharger le fichier de contenu, qui comprend des données de validation et d'autres données, du serveur (21) sur le dispositif de communication (31), et
une troisième partie exécutable configurée pour effectuer le contrôle de sécurité du fichier de contenu téléchargé du serveur (21) sur la base des données de validation.

18. Produit de programme informatique selon la revendication 17, **caractérisé en ce que** le dispositif de communication portable (31) comprend en outre un moyen d'authentification et dans lequel les données de validation identifient le serveur (21) et indiquent au moyen d'authentification si le contenu est accepté par le dispositif de communication portable (31).

19. Produit de programme informatique selon la revendication 17 ou 18, **caractérisé en ce que** le contrôle de sécurité comprend la détermination si le contenu téléchargé provient ou pas d'un serveur digne de confiance (21).

20. Produit de programme informatique selon l'une quelconque des revendications 17 à 19, **caractérisé en ce que** le moyen d'authentification effectue une série de contrôles d'erreur pour vérifier si le contenu a été reçu du serveur et lorsque le moyen d'authentification détermine que le contenu n'a pas été reçu du serveur, le dispositif de radiocommunication portable envoie une autre demande pour le contenu stocké au niveau du serveur.

21. Produit de programme informatique selon l'une quelconque des revendications 17 à 20, **caractérisé en ce que** le dispositif de communication portable (31) comprend un moyen de communication et dans lequel le contenu est rejeté par le moyen d'authentification si le moyen d'authentification détermine à partir des données de validation que le contenu ne provient pas du serveur (21) .

22. Produit de programme informatique selon l'une quelconque des revendications 17 à 21, **caractérisé en ce que** le dispositif de communication portable (31) comprend un moyen d'authentification et dans lequel le contenu est installé sur le dispositif de communication portable (31) après que le contenu est validé par le moyen d'authentification comme provenant du serveur (21).

23. Produit de programme informatique selon l'une quelconque des revendications 17 à 22, **caractérisé en ce que** le dispositif de communication portable (31) comprend un moyen d'authentification qui utilise les données de validation du contenu pour authentifier les autres données.

24. Procédé pour télécharger un contenu sur un terminal client se composant d'un dispositif de radiocommunication portable (31) à partir d'un serveur (21), le dispositif de radiocommunication portable (31) ayant une interface utilisateur comprenant une pluralité d'applications de menus sélectionnables par l'utilisateur et une application de navigateur (33),
**caractérisé en ce qu'**une ou plusieurs des applications de menus comprennent, incorporé à un sous-menu de cela, un lien de téléchargement direct sélectionnable par l'utilisateur (32) comprenant l'adresse de serveur, dans lequel en réponse à la sélection par l'utilisateur du lien de téléchargement direct (32) dans le sous-menu, l'application de navigateur (33) commande au dispositif de radiocommunication (31) de transmettre un signal pour se connecter au serveur (21), le procédé comprenant
la sélection dudit lien de téléchargement direct (32) dans le sous-menu pour demander un fichier de contenu stocké au niveau du serveur (21),
le traitement et le téléchargement du fichier de contenu, qui comprend des données de validation et d'autres données, du serveur (21) sur le dispositif de radiocommunication portable (31), et
l'exécution d'un contrôle de sécurité des données de validation du fichier de contenu téléchargé du serveur.

25. Procédé selon la revendication 24, **caractérisé en ce que** le dispositif de communication portable (31) comprend en outre un moyen d'authentification et dans lequel les données de validation identifient le serveur (21) et indiquent au moyen d'authentification si le contenu est accepté par le dispositif de communication portable (31).

26. Procédé selon la revendication 24 ou 25, **caractérisé en ce que** le moyen d'authentification effectue une série de contrôles d'erreur pour vérifier si le contenu a été reçu du serveur et lorsque le moyen d'authentification détermine que le contenu n'a pas été reçu du serveur, le dispositif de radiocommunication portable envoie une autre demande pour le contenu stocké au niveau du serveur.

27. Procédé selon l'une quelconque des revendications 24 à 26, **caractérisé en ce que** le dispositif de communication portable (31) comprend un moyen d'authentification et dans lequel le contenu est rejeté par le moyen d'authentification si le moyen d'authentification détermine à partir des données de validation que le contenu ne provient pas du serveur (21).

28. Procédé selon l'une quelconque des revendications 24 à 27, **caractérisé en ce que** le dispositif de communication portable (31) comprend un moyen d'authentification et dans lequel le contenu est installé sur le dispositif de communication portable (31) après que le contenu est validé par le moyen d'authentification comme provenant du serveur (21).

29. Procédé selon l'une quelconque des revendications 24 à 28, **caractérisé en ce que** le dispositif de communication portable (31) comprend un moyen d'authentification et dans lequel le moyen d'authentification utilise les données de validation du contenu pour authentifier les autres données.
